# EUROPEAN PATENT SPECIFICATION

(11) **EP 3 731 083 B1**
(45) Date of publication and mention of the grant of the patent: **20.08.2025**
(21) Application number: 19861140.2
(22) Date of filing: 03.09.2019
(51) Int. Cl.: G06F 8/654, G06F 9/4401, G06F 8/65

(54) **NON-VOLATILE MEMORY UPDATING APPARATUS AND METHOD**
VORRICHTUNG UND VERFAHREN ZUR AKTUALISIERUNG EINES NICHTFLÜCHTIGEN SPEICHERS
DISPOSITIF ET PROCÉDÉ D'ACTUALISATION DE MÉMOIRE NON VOLATILE

(30) Priority: 12.09.2018 KR 20180109207
(43) Date of publication of application: 28.10.2020
(73) Proprietor: LG Energy Solution, Ltd., Seoul 07335 (KR)
(72) Inventor: NAM, Ho-Chol, Daejeon 34122 (KR); CHOI, Moon-Gyu, Daejeon 34122 (KR)
(74) Representative: Plasseraud IP
(86) International application number: PCT/KR2019/011354
(87) International publication number: WO 2020/055025

(56) References cited:
- KR-A- 20090 004 406
- KR-A- 20130 111 750
- US-A1- 2011 307 668
- US-A1- 2011 307 669
- US-A1- 2016 124 740
- US-A1- 2017 010 896

## Description

### TECHNICAL FIELD

The present application claims priority to Korean Patent Application No. 10-2018-0109207 filed on September 12, 2018 in the Republic of Korea.

The present disclosure relates to a non-volatile memory updating apparatus and method, and more particularly, to a non-volatile memory updating apparatus and method capable of ensuring updating reliability while updating a non-volatile memory of a battery management system (BMS) provided to a battery pack.

### The invention is defined by the claims.

### BACKGROUND ART

In recent years, the demand for portable electronic products such as notebook computers, video cameras and portable phones has increased sharply, and the energy storage batteries, robots and satellites has been active developed. Accordingly, high-performance secondary batteries allowing repeated charging and discharging are being actively studied.

Secondary batteries commercially available at present include nickel-cadmium batteries, nickel-hydrogen batteries, nickel-zinc batteries, lithium secondary batteries and the like. Among them, the lithium secondary batteries have almost no memory effect compared to nickel-based secondary batteries and thus are in the limelight due to advantageous such as free charging and discharging, low self-discharge rate and high energy density.

Batteries are used in a wide variety of applications, and large capacities are often required for devices such as electric-driven vehicles or smart grid systems to which batteries are frequently utilized. In order to increase the capacity of the battery, the capacity of the secondary battery, namely the capacity of a battery cell itself, may be increased. However, in this case, the capacity increase effect is not large and there is a physical limitation on the size expansion of the secondary battery. Thus, generally, a battery pack in which a plurality of battery modules are connected in series and in parallel is widely used.

The battery pack includes a battery management system (BMS) having a plurality of chips and electrical circuits to measure a voltage, a current, a temperature, and the like of the battery and to control charging and discharging of the battery. For example, the BMS may include a chip such as a micro controller unit (MCU) having a central processing unit (CPU), a memory device, and the like.

In general, the MCU stores a program for operating the BMS in a memory device inside the MCU, and the CPU reads the program and controls the overall operation of the system accordingly. The memory device for storing a program for operating the system employs a volatile memory (RAM: Random Access Memory) and a non-volatile memory (ROM: Read Only Memory).

In the prior art, in order to update a non-volatile memory, a flag with a specific value (e.g., a Magic Flag) is recorded to a specific area of the non-volatile memory to check whether the program is normally recorded in the non-volatile memory. Also, by checking the flag, it is determined that the program is normally recorded in the non-volatile memory. However, in the process of recording the flag, it is inconvenient to separately create a specific area of the non-volatile memory and to continuously manage the specific area.

In addition, in the prior art, after confirming that the application code is normally recorded by checking the flag, a booting indicator should be read to execute the application code, inconveniently.

US 2016/124740 A1 discloses a date storage device and a method for reducing firmware update time.

### DISCLOSURE

### Technical Problem

The present disclosure is designed to solve the problems of the related art, and therefore the present disclosure is directed to providing an improved non-volatile memory updating apparatus and method, which may ensure updating reliability while updating a non-volatile memory of a BMS provided to a battery pack.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In one aspect of the present disclosure, there is provided a non-volatile memory updating apparatus for updating an application code stored in a non-volatile memory, the non-volatile memory updating apparatus comprising: a volatile memory configured to store the application code; and a central processing unit configured to record the application code in the volatile memory, record the application code, which is recorded in the volatile memory, in the non-volatile memory, and when the application code is completely recorded in the non-volatile memory, record a booting indicator indicating booting information of the application code in the non-volatile memory.

The central processing unit determines that the application code is normally recorded uniquely on the basis of the presence of the booting indicator recorded in the non-volatile memory, wherein
when receiving an execution command for the application code, the central processing unit check the presence of the booting indicator, and when it is confirmed that the booting indicator is normally recorded, the central processing unit executes the application code,
wherein the booting indicator is a code to be executed by the central processing unit before the application code is executed,
wherein the booting information indicated by the booting indicator includes a unique identifier, a location and a size of the application code.

In addition, the central processing unit may determine whether the application code recorded in the non-volatile memory is normally recorded, and stops recording the application code in the non-volatile memory when it is confirmed that the application code is normally recorded in the non-volatile memory.

In addition, the central processing unit may determine whether the application code is normally recorded by comparing the application code recorded in the volatile memory and the application code recorded in the non-volatile memory.

In addition, the central processing unit may determine that the application code is normally recorded when the application code recorded in the volatile memory is identical to the application code recorded in the non-volatile memory.

In addition, the central processing unit may set a storage area in the non-volatile memory in which the application code is recorded, and record the application code in a reverse direction from a section with a high address in the storage area to a section with a low address in the storage area.

In addition, when the application code is completely recorded in the storage area, the central processing unit may record the booting indicator in an area with a lower address than an address of the storage area in which the application code is stored.

In addition, the non-volatile memory updating apparatus according to an embodiment of the present disclosure may further comprise a communication unit configured to receive the application code from an external device.

In addition, a battery management system (BMS) according to an embodiment of the present disclosure comprises the non-volatile memory updating apparatus according to the present disclosure.

In addition, a battery pack according to an embodiment of the present disclosure comprises the non-volatile memory updating apparatus according to the present disclosure.

In addition, according to an embodiment of the present disclosure, there is also provided a non-volatile memory updating method for updating an application code stored in a non-volatile memory, the non-volatile memory updating method comprising: recording the application code in a volatile memory; recording the application code, which is recorded in the volatile memory, in the non-volatile memory; and when the application code is completely recorded in the non-volatile memory, recording a booting indicator indicating booting information of the application code in the non-volatile memory, determining that the application code is completely recorded uniquely on the basis of the presence of the booting indicator (110) recorded in the non-volatile memory (100), and when receiving an execution command for the application code, checking the presence of the booting indicator (110), and when it is confirmed that the booting indicator (110) is recorded, the central processing unit (300) is configured to execute the application code, wherein the booting indicator (110) is a code to be executed by the central processing unit (300) before the application code is executed,
wherein the booting information indicated by the booting indicator (110) includes a unique identifier, a location and a size of the application code.

### Advantageous Effects

According to one aspect of the present disclosure, whether an application code is normally recorded may be confirmed only using a booting indicator, without having to write a flag having a specific value (e.g., Magic Flag) in a specific area of the non-volatile memory.

According to another aspect of the present disclosure, since the process of recording a flag with a specific value (e.g., Magic Flag) may be excluded, it is possible to improve the operational efficiency of the non-volatile memory, and system errors caused by an error of the flag value or the like may be minimized or prevented.

According to another aspect of the present disclosure, if an error occurs while updating the application code to stop the updating process, the booting indicator is not recorded. Thus, whether an application code is normally recorded may be confirmed only using a booting indicator, without having to write a flag having a specific value (e.g., Magic Flag) in a specific area of the non-volatile memory.

The present disclosure may have various effects other than the above, and other effects of the present disclosure may be understood from the following description and more clearly figured out by the embodiments of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram schematically showing a functional configuration of a non-volatile memory updating apparatus according to an embodiment of the present disclosure.
FIG. 2 is a block diagram schematically showing a functional configuration of a central processing unit provided to the non-volatile memory updating apparatus according to an embodiment of the present disclosure.
FIG. 3 is a table showing a memory map of a non-volatile memory, which is referred to by the non-volatile memory updating apparatus according to an embodiment of the present disclosure.
FIG. 4 is a diagram schematically showing a process of updating the non-volatile memory by the non-volatile memory updating apparatus according to an embodiment of the present disclosure.
FIG. 5 is a flowchart schematically showing a non-volatile memory updating method according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, in the present disclosure, if it is determined that a detailed description of a related known structure or function may obscure the subject matter of the present disclosure, the detailed description will be omitted.

Throughout the specification, when a portion is referred to as "comprising" or "including" any element, it means that the portion may include other elements further, without excluding other elements, unless specifically stated otherwise.

In addition, throughout the specification, when a portion is referred to as being "connected" to another portion, it is not limited to the case that they are "directly connected", but it also includes the case where they are "indirectly connected" with another element being interposed between them.

A non-volatile memory updating apparatus 1 according to an embodiment of the present disclosure may be a non-volatile memory updating apparatus for updating an application code stored in a non-volatile memory 100. For example, the non-volatile memory updating apparatus 1 according to an embodiment of the present disclosure may be a device for updating an application code stored in a non-volatile memory 100 of a battery management system (BMS) included in a battery pack. For example, the non-volatile memory 100 according to an embodiment of the present disclosure may be a flash memory. In addition, the non-volatile memory updating apparatus 1 according to an embodiment of the present disclosure may be a microcontroller unit (MCU) provided in the BMS.

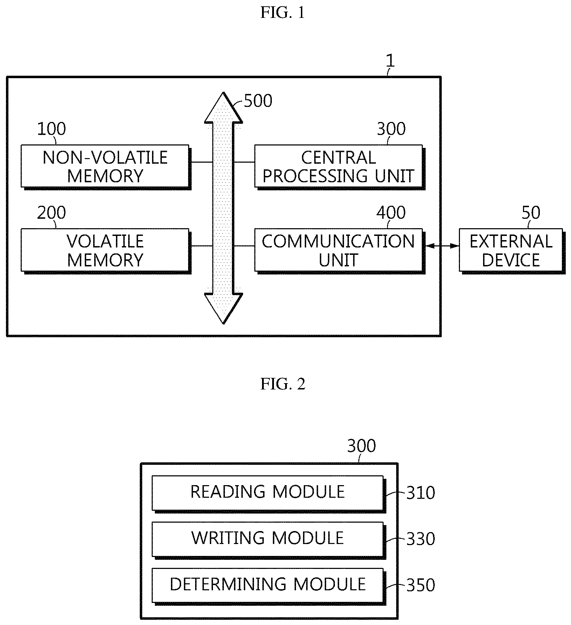

FIG. 1 is a diagram schematically showing a functional configuration of a non-volatile memory updating apparatus according to an embodiment of the present disclosure, and FIG. 2 is a block diagram schematically showing a functional configuration of a central processing unit provided to the non-volatile memory updating apparatus according to an embodiment of the present disclosure.

Referring to FIGS. 1 and 2, a non-volatile memory updating apparatus 1 according to an embodiment of the present disclosure includes a volatile memory 200 and a central processing unit 300.

The volatile memory 200 may be configured to store an application code. For example, the volatile memory 200 may be a memory device configured to store data. Here, the application code may be a code designed using a programming language. For example, the application code may be a program code associated with the operation of a BMS.

The volatile memory 200 according to an embodiment of the present disclosure is a memory that stores data for operating a system when starting the system. The volatile memory 200 may be a memory that stores data only when the system is turned on and erases the stored data when the system is turned off. In addition, the volatile memory 200 may store the application code in a specific area therein. For example, the volatile memory 200 may be implemented using a random access memory (RAM), a static RAM (SRAM), a dynamic RAM (DRAM), a synchronous DRAM (SDRAM), or the like.

Also, as shown in FIG. 1, the non-volatile memory updating apparatus 1 according to an embodiment of the present disclosure may include a non-volatile memory 100.

The non-volatile memory 100 may be a memory device that maintains the stored data even when a power supply is cut off. For example, the non-volatile memory 100 may be implemented using a flash memory device, a read only memory (ROM), a programmable ROM (PROM), an electrically programmable ROM (EPROM), an electrically erasable and programmable ROM (EPROM), a resistive memory device (e.g., a phase-change RAM (PRAM), a ferroelectric RAM (FRAM) and a resistive RAM (RRAM)), or the like.

In addition, as shown in FIG. 1, the volatile memory 200 and the non-volatile memory 100 according to an embodiment of the present disclosure may be electrically connected to the central processing unit 300 through a data bus 500 so as to be accessible by the central processing unit 300. Also, the volatile memory 200 and the non-volatile memory 100 may store and/or update and/or erase and/or transmit data generated when a program including various control logics and/or a control logic performed by the central processing unit 300 is executed

The central processing unit 300 may record an application code in the volatile memory 200. For example, as shown in FIG. 1, the central processing unit 300 may access the volatile memory 200 through the data bus 500 and record the application code in the volatile memory 200 through the data bus 500.

In addition, the central processing unit 300 may record the application code, which is recorded in the volatile memory 200, in the non-volatile memory 100. For example, as shown in FIG. 1, the central processing unit 300 may access the volatile memory 200 and the non-volatile memory 100 through the data bus 500. In addition, the central processing unit 300 may transmit the application code from the volatile memory 200 to the non-volatile memory 100 through the data bus 500 to record the application code in the non-volatile memory 100.

In addition, if the application code is completely recorded in the non-volatile memory 100, the central processing unit 300 may record a booting indicator indicating booting information of the application code in the non-volatile memory 100. For example, the central processing unit 300 may determine whether the application code is completely recorded in the non-volatile memory 100. For example, the central processing unit 300 may determine that the application code is completely recorded if a total size of the application code is recorded on the basis of the size (for example, byte) of the application code. In addition, the central processing unit 300 may record the booting indicator in the non-volatile memory 100 if the application code is completely recorded in the non-volatile memory 100. Here, the booting indicator may indicate the booting information of the application code recorded in the non-volatile memory 100. For example, the booting indicator may be a code executed by the central processing unit 300 before the application code is executed, in order to execute the application code. In addition, the booting indicator may indicate the booting information including a unique identifier, a location and a size of the application code.

Preferably, as shown in FIG. 2, the central processing unit 300 according to an embodiment of the present disclosure may include a reading module 310, a writing module 330 and a determining module 350.

The reading module 310 may access the volatile memory 200 or the non-volatile memory 100 and read the application code recorded in the volatile memory 200 or the non-volatile memory 100. For example, the reading module 310 may execute the application code recorded in the volatile memory 200 or the non-volatile memory 100. In addition, when reading the application code, the reading module 310 may sequentially read the application code from a memory area with a low address to a memory area with a high address.

The writing module 330 may access the volatile memory 200 or the non-volatile memory 100 and record the application code in the volatile memory 200 or the non-volatile memory 100. For example, the writing module 330 may store the application code recorded in the volatile memory 200 or the non-volatile memory 100. When writing the application code, the writing module 330 may record the application code in a forward direction from a memory area with a low address to a memory area with a high address.

In addition, when recording the application code, the writing module 330 according to an embodiment of the present disclosure may record the application code in a reverse order from a memory area with a high address to a memory area with a low address. In this case, the end of the application code may be recorded in the memory area with a high address, and the start of the application code may be recorded in the memory area with a low address.

The determining module 350 may determine whether the application code recorded in the non-volatile memory 100 is normally recorded. For example, the determining module 350 may determine whether all data of the application code is normally recorded in the non-volatile memory 100 without interruption. In addition, the determining module 350 may stop updating the application code when it is confirmed that the application code is normally recorded in the non-volatile memory 100. For example, the determining module 350 may stop updating the application code when it is confirmed that the application code is normally recorded in the non-volatile memory 100.

Preferably, the determining module 350 according to an embodiment of the present disclosure may compare the application code recorded in the volatile memory 200 and the application code recorded in the non-volatile memory 100. In addition, the determining module 350 may determine whether the application code is normally recorded by comparing the application code recorded in the volatile memory 200 and the application code recorded in the non-volatile memory 100.

Preferably, the determining module 350 according to an embodiment of the present disclosure may determine that the application code is normally recorded, if the application code recorded in the volatile memory 200 is identical to the application code recorded in the non-volatile memory 100.

Meanwhile, the central processing unit 300 may be implemented to optionally include a central processing unit (CPU), a processor, an application-specific integrated circuit (ASIC), other chipsets, a logic circuit, a register, and a communication modem and/or a data processing device, known in the art, to perform the above operation.

Preferably, as shown in FIG. 1, the non-volatile memory updating apparatus 1 according to an embodiment of the present disclosure may further include a communication unit 400.

The communication unit 400 may be configured to receive the application code from an external device 50. For example, as shown in FIG. 1, the communication unit 400 may receive the application code from the external device 50 by performing wired or wireless communication with the external device 50. In addition, the communication unit 400 may be electrically connected to the data bus 500 and may be connected to the non-volatile memory 100, the volatile memory 200 and the central processing unit 300 through the data bus 500, respectively.

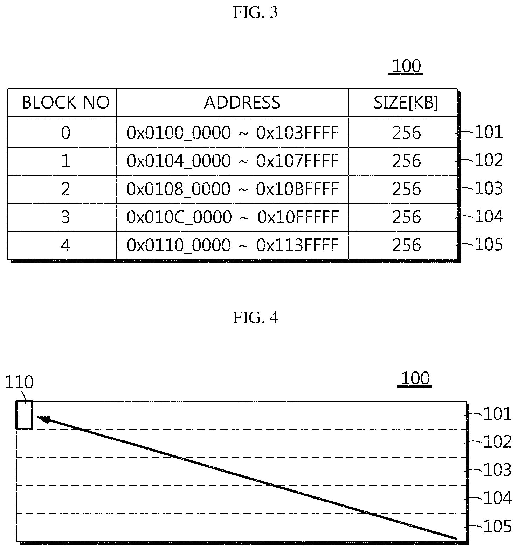

FIG. 3 is a table showing a memory map of a non-volatile memory, which is referred to by the non-volatile memory updating apparatus according to an embodiment of the present disclosure, and FIG. 4 is a diagram schematically showing a process of updating the non-volatile memory by the non-volatile memory updating apparatus according to an embodiment of the present disclosure.

Referring to FIGS. 3 and 4, the central processing unit 300 according to an embodiment of the present disclosure may set a storage area in the non-volatile memory 100 in which the application code is stored. For example, the central processing unit 300 may set the storage area in which application code is stored in a specific area of the non-volatile memory 100. For example, as shown in the table of FIG. 3, the non-volatile memory 100 may include a first storage area 101, a second storage area 102, a third storage area 103, a fourth storage area 104, and a fifth storage area 105.

The first storage area 101 may indicate a zeroth block and have addresses of 0x0100_0000 to 0x103FFFF with a size of 256 KB. In addition, the second storage area 102 may indicate a first block and have addresses of 0x0104_0000 to 0x107FFFF with a size of 256 KB. In addition, the third storage area 103 may represent a second block and have addresses from 0x0108_0000 to 0x10BFFFF with a size of 256 KB. In addition, the fourth storage area 104 may indicate a third block and have addresses of 0x010C_0000 to 0x10FFFFF with a size of 256KB. In addition, the fifth storage area 105 may indicate a fourth block and have addresses of 0x0110_0000 to 0x113FFFF with a size of 256 KB.

Preferably, the central processing unit 300 may record the application code in a reverse direction from a section with a high address in the storage area to a section with a low address in the storage area. For example, as shown in FIG. 4, the central processing unit 300 may record the application code in a reverse direction along the arrow of FIG. 4 from fifth storage area 105 to the first storage area 101 in order.

Preferably, if the application code is completely recorded in the storage area, the central processing unit 300 may record a booting indicator 110 in an area with a lower address lower than the address of the storage area in which the application code is stored. For example, the central processing unit 300 may determine the size of the application code, and may determine that the application code is completely recorded, if all data of the application code is recorded in the storage area on the basis of the size of the application code. Subsequently, the central processing unit 300 may record the booting indicator 110 in an area with a lower address than the address of the storage area in which the application code is stored.

For example, in the embodiment of FIGS. 3 and 4, if the size of the application code is 508 KB and the size of the booting indicator 110 is 4 KB, the central processing unit 300 may record the application code in the order from the final address of the second storage area 102 to the first storage area 101. In addition, if the application code is completely recorded, the central processing unit 300 may record the booting indicator 110 immediately before the application code. In this case, the central processing unit 300 may record a final code of the application code in a final address of the second storage area 102, record a first code of the application code immediately after the booting indicator 110 of the first storage area 101, and record the booting indicator 110 at a first address of the first storage area 101.

Preferably, the central processing unit 300 may determine whether the application code is normally recorded, on the basis of the presence of the booting indicator 110 recorded in the non-volatile memory 100. For example, as shown in the embodiment of FIG. 4, the central processing unit 300 may search for the booting indicator 110 recorded in the non-volatile memory 100, and if the booting indicator 110 exists in the non-volatile memory 100, the central processing unit 300 may determine whether the application code is normally recorded on the basis of this.

Preferably, if the central processing unit 300 receives an execution command for the application code, the central processing unit 300 may check the presence of the booting indicator 110. In addition, if it is determined that the booting indicator 110 is normally recorded, the central processing unit 300 may execute the application code. For example, as shown in the embodiment of FIG. 4, the central processing unit 300 may check the presence of the booting indicator 110 in order to execute the application code. In addition, if it is confirmed that the booting indicator 110 is normally recorded, the central processing unit 300 may execute the application code by sequentially reading the application code from an application code recorded immediately after the booting indicator 110.

Through this configuration, the non-volatile memory updating apparatus according to an embodiment of the present disclosure may check whether the application code is normally recorded only with the booting indicator 110, without having to record a separate flag (for example, Magic Flag) having a specific value in a specific area of the non-volatile memory 100.

The non-volatile memory updating apparatus according to the present disclosure may include a battery management system (BMS). That is, the BMS according to the present disclosure may be included in the non-volatile memory updating apparatus of the present disclosure as described above. In this configuration, at least a part of the components of the non-volatile memory updating apparatus according to the present disclosure may be implemented by supplementing or adding functionality of components included in the conventional BMS. For example, the central processing unit 300 and the non-volatile memory 100 of the non-volatile memory updating apparatus according to the present disclosure may be implemented as components of the BMS.

In addition, the non-volatile memory updating apparatus according to the present disclosure may be provided to a battery pack. That is, the battery pack according to the present disclosure may include the non-volatile memory updating apparatus according to the present disclosure. Here, the battery pack may include at least one secondary battery, the non-volatile memory updating apparatus, electrical components (such as a BMS, a relay and a fuse), a case and so on.

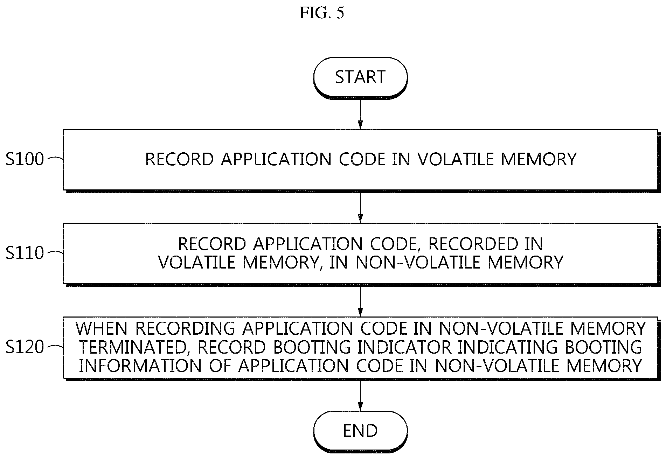

FIG. 5 is a schematic flowchart for illustrating a non-volatile memory updating method according to an embodiment of the present disclosure. In FIG. 5, each step may be performed by any component of the non-volatile memory updating apparatus according to the present disclosure as described above.

As shown in FIG. 5, a non-volatile memory updating method according to an embodiment of the present disclosure includes a volatile memory recording step (S100), a non-volatile memory recording step (S110) and a booting indicator recording step (S120).

First, in the volatile memory recording step (S100), the application code may be recorded in the volatile memory. Subsequently, in the non-volatile memory recording step S110, the application code recorded in the volatile memory may be recorded in the non-volatile memory. Subsequently, in the booting indicator recording step (S120), if the application code is completely recorded in the non-volatile memory, a booting indicator indicating booting information of the application code may be recorded in the non-volatile memory.

Preferably, in the booting indicator recording step (S120) according to an embodiment of the present disclosure, it is determined whether the application code recorded in the non-volatile memory is normally recorded, and then if it is confirmed that the application code is normally recorded in the non-volatile memory, updating the application code may be stopped.

Preferably, in the booting indicator recording step (S120) according to an embodiment of the present disclosure, it may be determined whether the application code is normally recorded, on the basis of the presence of the booting indicator recorded in the non-volatile memory.

Preferably, the non-volatile memory updating method according to an embodiment of the present disclosure may further include an application code executing. In the application code executing step, when the execution command for the application code is received, the presence of the booting indicator may be checked, and if it is confirmed that the booting indicator is normally recorded, the application code may be executed.

Preferably, in the non-volatile memory recording step (S110) according to an embodiment of the present disclosure, it may be determined whether the application code is normally recorded by comparing the application code recorded in the volatile memory and the application code recorded in the non-volatile memory.

Preferably, in the non-volatile memory recording step (S110) according to an embodiment of the present disclosure, if the application code recorded in the volatile memory is identical to the application code recorded in the non-volatile memory, it may be determined that the application code is normally recorded.

Preferably, in the non-volatile memory recording step (S110) according to an embodiment of the present disclosure, a storage area in the non-volatile memory where the application code is stored may be set, and the application code may be recorded in a reverse direction from the a section with a high address in the storage area to a section with a low address in the storage area.

Preferably, in the booting indicator recording step (S120) according to an embodiment of the present disclosure, if the application code is completely recorded in the storage area, the booting indicator may be recorded in an area with a lower address than the address of the storage area where the application code is stored.

Also, when the control logic is implemented in software, the central processing unit may be implemented as a set of program modules. At this time, the program modules may be stored in a memory device and executed by the central processing unit.

In addition, there is no particular limitation on the types of various control logics of the central processing unit, as long as one or more control logics are combined and the combined control logic is written in a computer-readable code system so that the computer-readable access is possible. As one example, the recording medium includes at least one selected from the group consisting of a ROM, a RAM, a register, a CD-ROM, a magnetic tape, a hard disk, a floppy disk and an optical data recording device. In addition, the code system may be stored and executed in a distributed manner on computers connected through a network. Moreover, functional programs, code and segments for implementing the combined control logics may be easily inferred by programmers in the technical field to which the present disclosure belongs.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

1: non-volatile memory updating apparatus
50: external device
100: non-volatile memory
110: booting indicator
200: volatile memory
300: central processing unit
310: reading module
330: writing module
350: determining module
400: communication unit
500: data bus

## Claims

1. A non-volatile memory updating apparatus (1) for updating an application code stored in a non-volatile memory (100), the non-volatile memory updating apparatus (1) comprising:
• a volatile memory (200) configured to store the application code; and
• a central processing unit (300) configured to:
- record the application code in the volatile memory (200), record the application code, which is recorded in the volatile memory (200), in the non-volatile memory (100), and when the application code is completely recorded in the non-volatile memory (100), record a booting indicator (110) indicating booting information of the application code in the non-volatile memory (100), wherein the booting indicator (110) is a code to be executed by the central processing unit (300) before the application code is executed, and wherein the booting information indicated by the booting indicator (110) includes a unique identifier, a location and a size of the application code,
- determine that the application code is completely recorded uniquely on the basis of the presence of the booting indicator (110) recorded in the non-volatile memory (100),
- when receiving an execution command for the application code, check the presence of the booting indicator (110), and when it is confirmed that the booting indicator (110) is recorded, execute the application code,
- set a storage area (101 to 105) in the non-volatile memory (100) in which the application code is recorded, and record the application code in a reverse direction from a section with a high address in the storage area to a section with a low address in the storage area, and
- when the application code is completely recorded in the storage area (101 to 105), record the booting indicator (110) in an area with a lower address than an address of the storage area in which the application code is stored, immediately before the application code.

2. The non-volatile memory updating apparatus (1) according to claim **1,**
wherein the central processing unit (300) is configured to determine whether the application code recorded in the non-volatile memory (100) is completely recorded, and stop recording the application code in the non-volatile memory (100) when it is confirmed that the application code is completely recorded in the non-volatile memory (100).

3. The non-volatile memory updating apparatus (1) according to claim 1,
wherein the central processing unit (300) is configured to determine whether the application code is completely recorded by comparing the application code recorded in the volatile memory (200) and the application code recorded in the non-volatile memory (100).

4. The non-volatile memory updating apparatus (1) according to claim 3,
wherein the central processing unit (300) is configured to determine that the application code is completely recorded when the application code recorded in the volatile memory (200) is identical to the application code recorded in the non-volatile memory (100).

5. The non-volatile memory updating apparatus (1) according to claim 1, further comprising a communication unit (400) configured to receive the application code from an external device (50).

6. A battery management system (BMS), comprising the non-volatile memory updating apparatus (1) according to any one of claims 1 to 5.

7. A battery pack, comprising the non-volatile memory updating apparatus (1) according to any one of claims 1 to 5.

8. A non-volatile memory updating method for updating an application code stored in a non-volatile memory (100), the non-volatile memory updating method comprising:
recording (S100) the application code in a volatile memory (200);
setting a storage area (101 to 105) in the non-volatile memory (100) in which the application code can be recorded;
recording (S110) the application code, which is recorded in the volatile memory (200), in the non-volatile memory (100) in a reverse direction from a section with a high address in the storage area to a section with a low address in the storage area;
when the application code is completely recorded in the non-volatile memory (100), recording a booting indicator (110) indicating booting information of the application code in the non-volatile memory (100), in an area with a lower address than an address of the storage area in which the application code is stored, immediately before the application code, wherein the booting indicator (110) is a code to be executed before the application code is executed, and wherein the booting information indicated by the booting indicator (110) includes a unique identifier, a location and a size of the application code,
determining that the application code is completely recorded uniquely on the basis of the presence of the booting indicator (110) recorded in the non-volatile memory (100), and
when receiving an execution command for the application code, checking the presence of the booting indicator (110), and when it is confirmed that the booting indicator (110) is recorded, executing the application code.

## Patentansprüche

1. Aktualisierungsvorrichtung (1) für einen nicht-flüchtigen Speicher zum Aktualisieren eines Anwendungscodes, welcher in einem nicht-flüchtigen Speicher (100) gespeichert ist, wobei die Aktualisierungsvorrichtung (1) für einen nicht-flüchtigen Speicher umfasst:
- einen flüchtigen Speicher (200), welcher dazu eingerichtet ist, den Anwendungscode zu speichern, und
- eine zentrale Verarbeitungseinheit (300), welche dazu eingerichtet ist:
- den Anwendungscode in dem flüchtigen Speicher (200) aufzuzeichnen, den Anwendungscode, welcher in dem flüchtigen Speicher (200) aufgezeichnet ist, in dem nicht-flüchtigen Speicher (100) aufzuzeichnen, und wenn der Anwendungscode vollständig in dem nicht-flüchtigen Speicher (100) aufgezeichnet ist, eine Booting-Anzeige (110), welche Booting-Informationen des Anwendungscodes anzeigt, in dem nicht-flüchtigen Speicher (100) aufzuzeichnen, wobei die Booting-Anzeige (110) ein Code ist, welcher von der zentralen Verarbeitungseinheit (300) auszuführen ist, bevor der Anwendungscode ausgeführt wird, und wobei die Booting-Informationen, welche von der Booting-Anzeige (110) angezeigt werden, eine eindeutige Kennung, einen Ort und eine Größe des Anwendungscodes umfassen,
- zu bestimmen, dass der Anwendungscode vollständig aufgezeichnet ist, lediglich auf der Grundlage des Vorliegens der Booting-Anzeige (110), welche in dem nicht-flüchtigen Speicher (100) aufgezeichnet wird,
- wenn eine Ausführungsanweisung für den Anwendungscode empfangen wird, das Vorliegen der Booting-Anzeige (110) zu überprüfen, und wenn bestätigt wird, dass die Booting-Anzeige (110) aufgezeichnet ist, den Anwendungscode auszuführen,
- einen Speicherbereich (101 bis 105) in dem nicht-flüchtigen Speicher (100) zu setzen, in welchem der Anwendungscode aufgezeichnet wird, und den Anwendungscode in einer umgekehrten Richtung von einem Abschnitt mit einer hohen Adresse in dem Speicherbereich zu einem Abschnitt mit einer niedrigen Adresse in dem Speicherbereich aufzuzeichnen, und
- wenn der Anwendungscode vollständig in dem Speicherbereich (101 bis 105) aufgezeichnet ist, die Booting-Anzeige (110) in einem Bereich mit einer niedrigeren Adresse als eine Adresse des Speicherbereichs aufzuzeichnen, in welchem der Anwendungscode gespeichert ist, unmittelbar vor dem Anwendungscode.

2. Aktualisierungsvorrichtung (1) für einen nicht-flüchtigen Speicher nach Anspruch 1, wobei die zentrale Verarbeitungseinheit (300) dazu eingerichtet ist, zu bestimmen, ob der in dem nicht-flüchtigen Speicher (100) aufgezeichnete Anwendungscode vollständig aufgezeichnet ist, und das Aufzeichnen des Anwendungscodes in dem nicht-flüchtigen Speicher (100) zu stoppen, wenn bestätigt wird, dass der Anwendungscode vollständig in dem nicht-flüchtigen Speicher (100) aufgezeichnet ist.

3. Aktualisierungsvorrichtung (1) für einen nicht-flüchtigen Speicher nach Anspruch 1, wobei die zentrale Verarbeitungseinheit (300) dazu eingerichtet ist, zu bestimmen, ob der Anwendungscode vollständig aufgezeichnet ist, indem der in dem flüchtigen Speicher (200) aufgezeichnete Anwendungscode und der in dem nicht-flüchtigen Speicher (100) aufgezeichnete Anwendungscode verglichen werden.

4. Aktualisierungsvorrichtung (1) für einen nicht-flüchtigen Speicher nach Anspruch 3, wobei die zentrale Verarbeitungseinheit (300) dazu eingerichtet ist, zu bestimmen, dass der Anwendungscode vollständig aufgezeichnet ist, wenn der in dem flüchtigen Speicher (200) aufgezeichnete Anwendungscode identisch zu dem in dem nicht-flüchtigen Speicher (100) aufgezeichneten Anwendungscode ist.

5. Aktualisierungsvorrichtung (1) für einen nicht-flüchtigen Speicher nach Anspruch 1, ferner umfassend eine Kommunikationseinheit (400), welche dazu eingerichtet ist, den Anwendungscode von einer externen Vorrichtung (50) zu empfangen.

6. Batterie-Verwaltungssystem (BMS), umfassend die Aktualisierungsvorrichtung (1) für einen nicht-flüchtigen Speicher nach einem der Ansprüche 1 bis 5.

7. Batteriepack, umfassend die Aktualisierungsvorrichtung (1) für einen nicht-flüchtigen Speicher nach einem der Ansprüche 1 bis 5.

8. Aktualisierungsverfahren für einen nicht-flüchtigen Speicher zum Aktualisieren eines Anwendungscodes, welcher in einem nicht-flüchtigen Speicher (100) gespeichert ist, wobei das Aktualisierungsverfahren für einen nicht-flüchtigen Speicher umfasst:
Aufzeichnen (S100) des Anwendungscodes in einem flüchtigen Speicher (200);
Setzen eines Speicherbereichs (101 bis 105) in dem nicht-flüchtigen Speicher (100), in welchem der Anwendungscode aufgezeichnet werden kann;
Aufzeichnen (S110) des Anwendungscodes, welcher in dem flüchtigen Speicher (200) aufgezeichnet ist, in dem nicht-flüchtigen Speicher (100) in einer umgekehrten Richtung von einem Abschnitt mit einer hohen Adresse in dem Speicherbereich zu einem Abschnitt mit einer niedrigen Adresse in dem Speicherbereich;
wenn der Anwendungscode vollständig in dem nicht-flüchtigen Speicher (100) aufgezeichnet ist, Aufzeichnen einer Booting-Anzeige (110), welche Booting-Informationen des Anwendungscodes anzeigt, in dem nicht-flüchtigen Speicher (100), in einem Bereich mit einer niedrigeren Adresse als eine Adresse des Speicherbereichs, in welchem der Anwendungscode gespeichert ist, unmittelbar vor dem Anwendungscode, wobei die Booting-Anzeige (110) ein Code ist, welcher auszuführen ist, bevor der Anwendungscode ausgeführt wird, und wobei die Booting-Informationen, welche von der Booting-Anzeige (110) angezeigt werden, eine eindeutige Kennung, einen Ort und eine Größe des Anwendungscodes umfassen,
- Bestimmen, dass der Anwendungscode vollständig aufgezeichnet ist, lediglich auf der Grundlage des Vorliegens der Booting-Anzeige (110), welche in dem nicht-flüchtigen Speicher (100) aufgezeichnet wird, und
- wenn eine Ausführungsanweisung für den Anwendungscode empfangen wird, Überprüfen des Vorliegens der Booting-Anzeige (110), und wenn bestätigt wird, dass die Booting-Anzeige (110) aufgezeichnet ist, Ausführen des Anwendungscodes.

## Revendications

1. Appareil (1) de mise à jour de mémoire non volatile pour mettre à jour un code d'application stocké dans une mémoire non volatile (100), l'appareil (1) de mise à jour de mémoire non volatile comprenant :
• une mémoire volatile (200) configurée pour stocker le code d'application ; et
• une unité de traitement centrale (300) configurée pour :
- enregistrer le code d'application dans la mémoire volatile (200), enregistrer le code d'application, qui est enregistré dans la mémoire volatile (200), dans la mémoire non volatile (100), et lorsque le code d'application est complètement enregistré dans la mémoire non volatile (100), enregistrer un indicateur d'amorçage (110) indiquant des informations d'amorçage du code d'application dans la mémoire non volatile (100), dans lequel l'indicateur d'amorçage (110) est un code devant être exécuté par l'unité de traitement centrale (300) avant que le code d'application ne soit exécuté, et dans lequel les informations d'amorçage indiquées par l'indicateur d'amorçage (110) comportent un identifiant unique, un emplacement et une taille du code d'application,
- déterminer que le code d'application est complètement enregistré uniquement sur la base de la présence de l'indicateur d'amorçage (110) enregistré dans la mémoire non volatile (100),
- lors de la réception d'une commande d'exécution pour le code d'application, vérifier la présence de l'indicateur d'amorçage (110), et lorsqu'il est confirmé que l'indicateur d'amorçage (110) est enregistré, exécuter le code d'application,
- définir une zone de stockage (101 à 105) dans la mémoire non volatile (100) dans laquelle le code d'application est enregistré, et enregistrer le code d'application dans une direction contraire à partir d'une section avec une adresse haute dans la zone de stockage jusqu'à une section avec une adresse basse dans la zone de stockage, et
- lorsque le code d'application est complètement enregistré dans la zone de stockage (101 à 105), enregistrer l'indicateur d'amorçage (110) dans une zone avec une adresse plus basse qu'une adresse de la zone de stockage dans laquelle le code d'application est stocké, juste avant le code d'application.

2. Appareil (1) de mise à jour de mémoire non volatile selon la revendication 1,
dans lequel l'unité de traitement centrale (300) est configurée pour déterminer si le code d'application enregistré dans la mémoire non volatile (100) est complètement enregistré, et arrêter l'enregistrement du code d'application dans la mémoire non volatile (100) lorsqu'il est confirmé que le code d'application est complètement enregistré dans la mémoire non volatile (100).

3. Appareil (1) de mise à jour de mémoire non volatile selon la revendication 1,
dans lequel l'unité de traitement centrale (300) est configurée pour déterminer si le code d'application est complètement enregistré en comparant le code d'application enregistré dans la mémoire volatile (200) et le code d'application enregistré dans la mémoire non volatile (100).

4. Appareil (1) de mise à jour de mémoire non volatile selon la revendication 3,
dans lequel l'unité de traitement centrale (300) est configurée pour déterminer que le code d'application est complètement enregistré lorsque le code d'application enregistré dans la mémoire volatile (200) est identique au code d'application enregistré dans la mémoire non volatile (100).

5. Appareil (1) de mise à jour de mémoire non volatile selon la revendication 1, comprenant en outre une unité de communication (400) configurée pour recevoir le code d'application à partir d'un dispositif externe (50).

6. Système de gestion de batterie (BMS), comprenant l'appareil (1) de mise à jour de mémoire non volatile selon l'une quelconque des revendications 1 à 5.

7. Bloc-batterie comprenant l'appareil (1) de mise à jour de mémoire non volatile selon l'une quelconque des revendications 1 à 5.

8. Procédé de mise à jour de mémoire non volatile pour mettre à jour un code d'application stocké dans une mémoire non volatile (100), le procédé de mise à jour de mémoire non volatile comprenant :
l'enregistrement (S100) du code d'application dans une mémoire volatile (200) ;
la définition d'une zone de stockage (101 à 105) dans la mémoire non volatile (100) dans laquelle le code d'application peut être enregistré ;
l'enregistrement (S110) du code d'application, qui est enregistré dans la mémoire volatile (200), dans la mémoire non volatile (100) dans une direction contraire à partir d'une section avec une adresse haute dans la zone de stockage jusqu'à une section avec une adresse basse dans la zone de stockage ;
lorsque le code d'application est complètement enregistré dans la mémoire non volatile (100), l'enregistrement d'un indicateur d'amorçage (110) indiquant des informations d'amorçage du code d'application dans la mémoire non volatile (100), dans une zone avec une adresse plus basse qu'une adresse de la zone de stockage dans laquelle le code d'application est stocké, juste avant le code d'application, dans lequel l'indicateur d'amorçage (110) est un code devant être exécuté avant que le code d'application ne soit exécuté, et dans lequel les informations d'amorçage indiquées par l'indicateur d'amorçage (110) comportent un identifiant unique, un emplacement et une taille du code d'application,
le fait de déterminer que le code d'application est complètement enregistré uniquement sur la base de la présence de l'indicateur d'amorçage (110) enregistré dans la mémoire non volatile (100), et
lors de la réception d'une commande d'exécution pour le code d'application, la vérification de la présence de l'indicateur d'amorçage (110), et lorsqu'il est confirmé que l'indicateur d'amorçage (110) est enregistré, l'exécution du code d'application.
